# EUROPEAN PATENT APPLICATION

(11) **EP 2 874 220 A1**
(43) Date of publication of application: **20.05.2015**
(21) Application number: 13816347.2
(22) Date of filing: 11.07.2013
(51) Int. Cl.: H01M 8/02, C23C 18/44, C23C 18/50, C23C 18/52

(54) **FUEL CELL SEPARATOR, FUEL CELL, FUEL CELL STACK, AND METHOD FOR PRODUCING FUEL CELL SEPARATOR**

(30) Priority: 13.07.2012 JP 2012157181
(71) Applicant: Toyo Kohan Co., Ltd., Tokyo 102-8447 (JP)
(72) Inventor: MUKAI, Nobuaki, Kudamatsu-shi Yamaguchi 744-8611 (JP)
(74) Representative: Ter Meer Steinmeister & Partner
(86) International application number: PCT/JP2013/068957
(87) International publication number: WO 2014/010663

(57) **Abstract**

A separator for fuel cells is provided. The separator includes: a base material; an underlying alloy layer formed on the base material; and a gold plate layer formed on the underlying alloy layer. The separator is characterized in that the underlying alloy layer is formed of an M1-M2-M3 alloy (where M1 is at least one element selected from Ni, Fe, Co, Cu, Zn and Sn, M2 is at least one element selected from Pd, Re, Pt, Rh, Ag and Ru, and M3 is at least one element selected from P and B).

## Description

### [Technical Field]

The present invention relates to a separator for fuel cells, a fuel cell, a fuel cell stack, and a method of manufacturing a separator for fuel cells.

### [Background Art]

A separator for fuel cells is used as a member of a fuel cell that constitutes a fuel cell stack, and has a function to supply an electrode with fuel gas or air through gas flow channels and a function to collect electrons generated at the electrode. In the past, as such a separator for fuel cells, there has been used a separator for fuel cells configured such that a carbon plate is formed with gas flow channels.

When a carbon plate is used as a material that constitutes a separator for fuel cells, however, there is a problem in that the material cost and working cost increase. It is therefore required to substitute the carbon plate with a metal, such as aluminum, stainless steel or titanium alloy, which can reduce the material cost and can be formed with gas flow channels by means of high speed press working.

To this end, Patent Document 1 discloses a separator for fuel cells configured such that a metallic base material is used as a mother material of the separator for fuel cells and a first layer of a certain element and a gold plate layer are formed on the metallic base material by means of electrolytic plating, for example.

### [Prior Art Document]

### [Patent Document]

[Patent Document 1] JP 2001-351642 A

### [Summary of Invention]

### [Problems to be solved by Invention]

When the gold plate layer is formed by means of electrolytic plating at the time of manufacturing a separator for fuel cells as in the above-described Patent Document 1, manufacturing processes as below may have to be performed. That is, a first manufacturing process may be mentioned as a method in which a gold plate layer is formed on a metallic base material by means of electrolytic plating and thereafter gas flow channels are formed by means of press working. A second manufacturing process may otherwise be mentioned as a method in which gas flow channels are formed by means of press working for a metallic base material and thereafter a gold plate layer is formed on the metallic base material by means of electrolytic plating. According to the first manufacturing process, however, a problem may arise in that cracks occur in the gold plate layer due to stresses applied when the press working is performed, because the gold plate layer is formed on the metallic base material by means of electrolytic plating and thereafter the gas flow channels are formed by means of press working. On the other hand, the second manufacturing process involves a problem in that the gold plate layer may be nonuniformly deposited to cause unformed parts of the gold plate layer because the electrolytic plating is performed for the gas flow channel part having irregularities.

Formation of the gold plate layer on the metallic base material may also be performed by means of electroless plating. In this case, if a method like in the above second manufacturing process is used such that gas flow channels are formed by means of press working for the metallic base material and thereafter a gold plate layer is formed by means of electroless plating, the gold plate can be uniformly formed for the gas flow channel part having irregularities while suppressing the occurrence of unformed parts. However, if electroless substitution plating is used as the electroless plating, the metallic base material as a material to be plated with gold may locally dissolve to generate micro recesses at the surface. The micro recesses thus generated will cause poor deposition of gold, so that pinholes may occur at the surface of the gold plate layer to be formed. This may result in problems in that the obtained separator for fuel cells deteriorates in its corrosion resistance and increases in the contact resistance with another component, and the function of collecting electrons becomes poor. In order to solve such problems due to pinholes, there may be used a method of further performing electroless reduction gold plating on the gold plate layer formed by the electroless substitution gold plating thereby to cover the pinholes. In this method, however, the gold plate layer may have to be formed with a large thickness in total to allow the electroless reduction gold plating to cover the pinholes, which may be problematic in cost.

The present invention has been made in consideration of such actual circumstances, and an object of the present invention is to provide a separator for fuel cells which is excellent in the corrosion resistance and the conductivity, by uniformly forming the gold plate layer even for the gas flow channel part having irregularities to prevent the occurrence of unformed parts and pinholes in the gold plate layer without increasing the thickness of the gold plate layer.

### [Means for solving problems]

As a result of intensive studies to achieve the above object, the present inventor has found that the above object can be achieved by allowing a separator for fuel cells formed with a gold plate layer on a base material to have: an underlying alloy layer formed at the side of the base material and constituted of certain elements; and the gold plate layer formed as an uppermost surface on the underlying alloy layer. The present inventor has thus accomplished the present invention.

That is, according to an aspect of the present invention, a separator for fuel cells is provided. The separator comprises: a base material; an underlying alloy layer formed on the base material; and a gold plate layer formed on the underlying alloy layer. The separator is characterized in that the underlying alloy layer is formed of an M1-M2-M3 alloy (where M1 is at least one element selected from Ni, Fe, Co, Cu, Zn and Sn, M2 is at least one element selected from Pd, Re, Pt, Rh, Ag and Ru, and M3 is at least one element selected from P and B).

According to another aspect of the present invention, there is provided a fuel cell configured using the above separator for fuel cells.

According to still another aspect of the present invention, there is provided a fuel cell stack configured such that a plurality of the above fuel cells are stacked together.

According to a further aspect of the present invention, there is provided a method of manufacturing a separator for fuel cells. The method comprises: a step of forming an underlying alloy layer on a surface of a base material; and a step of forming a gold plate layer directly on the underlying alloy layer by means of electroless reduction plating using a cyanide-free gold plating bath. The method is characterized in that the underlying alloy layer is formed of an M1-M2-M3 alloy (where M1 is at least one element selected from Ni, Fe, Co, Cu, Zn and Sn, M2 is at least one element selected from Pd, Re, Pt, Rh, Ag and Ru, and M3 is at least one element selected from P and B).

### [Effect of Invention]

According to the present invention, there can be provided a separator for fuel cells which is excellent in the corrosion resistance and the conductivity by uniformly forming the gold plate layer even for the gas flow channel part having irregularities to prevent the occurrence of unformed parts and pinholes in the gold plate layer without increasing the thickness of the gold plate layer.

### [Brief Description of Drawings]

[FIG. 1] FIG. 1 is a graph which shows concentrations of dissolved ions from the gold plate coated materials obtained in Examples and Comparative Examples.
[FIG. 2] FIG. 2 is a diagram for explaining a method of measuring a contact resistance.
[FIG. 3] FIG. 3 is a graph which shows contact resistances of the gold plate coated materials obtained in Examples.
[FIG. 4] FIG. 4 is a graph which shows results when performing evaluation of fuel cell initial power generation capability with respect to the gold plate coated material obtained in an Example.

### [Mode(s) for Carrying out the Invention]

The separator for fuel cells according to the present invention will hereinafter be described.

The separator for fuel cells according to the present invention comprises a gold plate layer above a base material. The gold plate layer is formed on an underlying alloy layer that is formed at the side of the base material. The separator is characterized in that the underlying alloy layer is formed of an M1-M2-M3 alloy (where M1 is at least one element selected from Ni, Fe, Co, Cu, Zn and Sn, M2 is at least one element selected from Pd, Re, Pt, Rh, Ag and Ru, and M3 is at least one element selected from P and B).

### <Base material>

The base material is not particularly limited. Examples of the base material include steel, stainless steel, Al, Al alloy, Ti, Ti alloy, Cu, Cu alloy, Ni, and Ni alloy. The base material may be used without particular restriction after being worked into a necessary shape or form as that of a separator for fuel cells.

The thickness of the base material is also not particularly limited, and may be appropriately selected depending on the use. The thickness may preferably be 0.05 to 2.0 mm, and more preferably 0.1 to 0.3 mm.

The surface of the base material to be used may be preliminarily formed with irregularities (gas flow channels) that function as flow channels for fuel gas or air. The method of forming such gas flow channels is not particularly limited, but a method of forming the gas flow channels by means of press working may be mentioned, for example.

### <Underlying alloy layer>

The underlying alloy layer is an underlying layer for smoothly forming the gold plate layer and is formed of an M1-M2-M3 alloy. Here, the M1-M2-M3 alloy is constituted of M1, M2 and M3 which are different elements from one another, where M1 is at least one element selected from Ni, Fe, Co, Cu, Zn and Sn, M2 is at least one element selected from Pd, Re, Pt, Rh, Ag and Ru, and M3 is at least one element selected from P and B.

The method of forming the underlying alloy layer is not particularly limited. The underlying alloy layer can be formed by an appropriate method such as electrolytic plating, electroless plating and sputtering. As will be described later, it is particularly preferred that the underlying alloy layer is formed by electroless plating.

M1 in the M1-M2-M3 alloy is at least one element selected from Ni, Fe, Co, Cu, Zn and Sn. One element may be solely used, or two or more elements may be used in combination, such as in Ni-Fe, Ni-Co and Ni-Cu. Each element that constitutes M1 is an element having a property capable of independently forming a plate layer on the base material, and has an action to allow the underlying alloy layer to adhere tightly to the base material. In view of preventing the plating liquid from self-decomposition and enhancing the stability of the plating liquid, it is preferred to use at least one element selected from Ni and Co as M1, and particularly preferred is to use Ni.

M2 in the M1-M2-M3 alloy is at least one element selected from Pd, Re, Pt, Rh, Ag and Ru. One element may be solely used, or two or more elements may be used in combination. Each element that constitutes M2 is an element having an autocatalytic action, and acts as a catalyst for the reaction of a reductant in the plating bath when deposited on the base material, i.e., has an action to continuously progress the metal deposition reaction. In view of keeping low cost, it is preferred to use at least one element selected from Pd and Ag as M2, and particularly preferred is to use Pd.

M3 in the M1-M2-M3 alloy is at least one element selected from P and B. One element may be solely used, or two elements may be used in combination, such as in P-B. Each element that constitutes M3 is a metalloid that constitutes a reductant in the plating bath for forming the underlying alloy layer, and will be unavoidably incorporated into the underlying alloy layer in general when the underlying alloy layer is formed. In view of preventing the plating liquid from self-decomposition and enhancing the stability of the plating liquid, it is preferred to use P as M3.

The ratio of each element in the M1-M2-M3 alloy is preferably such that M1 is 20 to 50 at%, M2 is 30 to 50 at%, and M3 is 20 to 30 at%. The M1-M2-M3 alloy may slightly contain impurities, which are unavoidably mixed therein, to such an extent that allows the gold plate layer to be appropriately formed on the M1-M2-M3 alloy and prevents the occurrence of unformed parts and pinholes in the gold plate layer. Examples of such unavoidable impurities include a heavy metal, such as Pb, T1 and Bi, which is added as a stabilizer that prevents the plating liquid from self-decomposition and stabilizes the plating liquid. In view of reducing the environmental load, Bi may preferably be used as the stabilizer. By adjusting the composition ratio of the M1-M2-M3 alloy within the above range, the underlying alloy layer may be smoothly formed on the base material, and the gold plate layer to be formed on the underlying alloy layer can also be smoothly formed with reduced occurrence of pinholes.

Respective elements for the M1-M2-M3 alloy may be arbitrarily combined to be used. In view of preventing the plating liquid from self-decomposition and enhancing the stability of the plating liquid, Ni-Pd-P alloy and Co-Ag-P alloy are preferred, and Ni-Pd-P alloy is particularly preferred.

Formation of the underlying alloy layer of M1-M2-M3 alloy can be performed by plating on the base material using a plating bath which contains elements represented by M1, M2 and M3 and to which a reductant and a complexing agent are added (underlying alloy electroless plating bath). For example, when forming an underlying alloy layer of Ni-Pd-P alloy, the underlying alloy electroless plating bath to be used can be obtained by mixing a nickel plating bath and a palladium plating bath which are commonly used. Examples of the nickel plating bath include a plating bath that contains: a nickel salt such as nickel chloride, nickel sulfate, nickel nitrate and nickel acetate; a phosphorus-containing reductant such as hypophosphite; and a complexing agent such as citric acid. Examples of the palladium plating bath include a plating bath that contains: a palladium salt such as palladium chloride; a phosphorus-containing reductant such as hypophosphite and phosphite; and a complexing agent such as thiodiglycolic acid. When the nickel plating bath and the palladium plating bath are mixed to prepare the underlying alloy electroless plating bath, it is preferred that nickel chloride is used as the nickel salt and palladium chloride is used as the palladium salt. Mixing ratio of the nickel plating bath and the palladium plating bath may appropriately be set in accordance with the ratio of respective elements that constitute the Ni-Pd-P alloy. The above exemplifies the case in which the underlying alloy layer is formed of Ni-Pd-P alloy, but also in the case in which the underlying alloy layer is formed of other alloy than Ni-Pd-P alloy, there may be used an underlying alloy electroless plating bath obtained by appropriately adjusting a plating bath which contains respective elements of M1, M2 and M3 and to which a reductant and a complexing agent are added.

It is preferred that the underlying alloy layer is formed using the above-described underlying alloy electroless plating bath under a condition of pH of 4.0 to 7.0, a bath temperature of 30°C to 50°C, and an immersion time of 5 to 20 minutes.

The thickness of the underlying alloy layer may preferably be 0.01 to 1.0 µm, and more preferably 0.05 to 0.2 µm. The thickness of the underlying alloy layer being within the above range allows the gold plate layer to be smoothly formed on the underlying alloy layer by means of electroless reduction plating.

Here, the base material for being formed with such an underlying alloy layer may be preliminarily formed with gas flow channels such as by means of press working, as described above. According to the present invention, the underlying alloy layer can be formed on such a base material thereby to effectively prevent cracks in the underlying alloy layer of the separator for fuel cells to be obtained. This will be described in more detail. When the underlying alloy layer is formed on a base material on which gas flow channels are not formed and thereafter the gas flow channels are formed such as by means of press working, a problem may arise in that cracks occur in the underlying alloy layer due to stresses applied when the gas flow channels are formed. However, such a problem can be solved by preliminarily forming the gas flow channels on the base material and thereafter forming the underlying alloy layer as described above. In particular, according to the present invention, if the underlying alloy layer is formed by means of electroless plating, the gold plate layer can be uniformly formed for the gas flow channel part having irregularities while suppressing the occurrence of unformed parts of the gold plate layer.

In the present invention, when the underlying alloy layer is formed on the base material, the underlying alloy layer may be formed directly on the base material, but a modifying layer may be provided to enhance the interfacial adhesion property between the base material and the underlying alloy layer. The modifying layer may appropriately be formed in accordance with properties of the base material and the underlying alloy layer. In view of enhancing the interfacial adhesion property with the underlying alloy layer, the modifying layer may preferably be a layer that contains the same element or elements as M1 of the M1-M2-M3 alloy which constitutes the underlying alloy layer. For example, when Ni-Pd-P alloy is employed as the underlying alloy layer, the modifying layer may preferably be a Ni-based layer that contains Ni as the element represented by M1. When such a Ni-based layer is formed by means of electroless reduction plating, the Ni-based layer may be a Ni-P plate layer. One modifying layer may be provided, or two or more modifying layers may also be provided. When two or more modifying layers are provided, components that constitute respective layers may be or may not be the same. The method of forming the modifying layer or layers is not particularly limited. The modifying layer or layers can be formed by an appropriate method such as electrolytic plating, electroless plating and sputtering.

### <Gold plate layer>

The gold plate layer is a layer that is formed directly on the underlying alloy layer by using a cyanide-free gold plating bath to perform electroless reduction plating.

As described above, the separator for fuel cells according to the present invention comprises the underlying alloy layer of the M1-M2-M3 alloy on the base material preliminarily formed with the gas flow channels, and the gold plate layer is formed on the underlying alloy layer by means of electroless reduction plating. Here, according to the electroless reduction plating, the gold plate layer can be smoothly formed even for the irregular part of the gas flow channels, and the gold plate layer to be obtained will have no pinhole and will be uniformly formed. Therefore, the separator for fuel cells according to the present invention formed with such a gold plate layer can be excellent in the corrosion resistance and the conductivity. In addition, according to the present invention, the layer of M1-M2-M3 alloy is formed as the underlying alloy layer thereby to allow the gold plate layer to be formed using a cyanide-free gold plating bath, and it is therefore possible to reduce loads to working environment and external environment. That is, there may not arise problems due to increased loads to working environment and external environment, which would be problematic if a cyanide-based gold plating bath was used.

As the cyanide-free gold plating bath to be used when forming the gold plate layer, there can be used a cyanide-free gold plating bath which is commonly used for electroless reduction plating, i.e., a plating bath that contains one or more kinds of gold salts, such as chloroauric acid salt, gold sulfite, gold thiosulfate, and gold thiomalate. The gold plate layer may preferably be formed using the cyanide-free gold plating bath which contains gold salt or salts as described above under a condition of pH of 7.0 to 8.5 and a bath temperature of 55°C to 65°C. Immersion time in the gold plating bath when forming the gold plate layer is not particularly limited, and can be set depending on the necessary film thickness of the gold plate layer.

Conventionally, as the method of forming a gold plate layer on a base material, there has been used a method in which the electroless substitution plating is performed directly on the base material to form the gold plate layer. However, such a method of performing the electroless substitution gold plating involves problems in that the metallic base material as a material to be plated with gold may locally dissolve to generate recesses at the surface of the metallic base material, and the recesses thus generated will cause poor deposition of gold, so that pinholes may occur at the surface of the gold plate layer to be formed. In order to cover the pinholes thus generated, there has also been used a method of further performing electroless reduction gold plating after the gold plate layer is formed by the electroless substitution gold plating. In this method, however, the gold plate layer may have to be formed with a large thickness in total to allow the pinholes to be covered, which may be problematic in cost.

In contrast, the separator for fuel cells according to the present invention comprises the layer of M1-M2-M3 alloy as the underlying alloy layer thereby to allow the gold plate layer to be formed using the electroless reduction plating without performing electroless substitution gold plating, and the problems due to such pinholes can thus be solved. In particular, according to the present invention, the layer of M1-M2-M3 alloy is formed as the underlying alloy layer thereby to allow the gold plate layer to be smoothly formed using the electroless reduction plating. Therefore, the gold plate layer may not have to be formed with a large thickness to solve the above-described problems due to pinholes.

The above-described separator for fuel cells as disclosed in Patent Document 1 (JP 2001-351642 A), i.e., a separator for fuel cells configured such that a gold plate layer is formed on a metallic base material by means of electrolytic plating, is to be obtained by forming the gold plate layer using electrolytic plating. Therefore, when gas flow channels are formed for the metallic base material by means of press working and thereafter the gold plate layer is formed on the metallic base material by means of electrolytic plating, the electrolytic plating may have to be performed for the gas flow channel part with irregularities, so that the gold plate layer will be nonuniformly deposited to cause unformed parts of the gold plate layer. This may lead to a problem in that pinholes may readily occur to expose the underlying layer when the gold plate layer is formed with a small thickness by means of electrolytic plating on a base material such as used for a separator for fuel cells formed with gas flow channels (base material having more corners than those of a flat plate or the like).

In contrast, the separator for fuel cells according to the present invention is formed with the gold plate layer by means of electroless reduction plating. Therefore, when gas flow channels are formed for the metallic base material by means of press working and thereafter the gold plate layer is formed by means of electroless plating like in the above second manufacturing process, the gold plate layer can be smoothly formed for the irregular part, thus solving such a problem.

The thickness of the gold plate layer may preferably be 1 to 200 nm, and more preferably 5 to 100 nm. If the thickness of the gold plate layer is unduly small, a uniform gold plate layer will not be formed on the underlying alloy layer, so that the corrosion resistance and conductivity may possibly deteriorate when the gold plate layer is used as a part of a separator for fuel cells. On the other hand, unduly large thickness of the gold plate layer may be disadvantageous in cost.

The separator for fuel cells according to the present invention allows the gold plate layer to be uniformly formed even for the gas flow channel part with irregularities, and can prevent the occurrence of pinholes thereby being excellent in the corrosion resistance and conductivity and having superior quality. In particular, a separator for fuel cell has a surface formed with irregularities that function as flow channels for fuel gas or air, and takes a role to collect electrons generated at an electrode. Therefore, the irregular part may have to be smoothly formed with a gold plate layer, and the corrosion resistance and conductivity are also required. To this end, the separator for fuel cells according to the present invention allows the gold plate layer to be formed by means of electroless reduction plating, so that the gold plate layer may be smoothly formed even for the irregular part. Thus, the separator for fuel cells according to the present invention can have excellent corrosion resistance and conductivity and is superior in its quality.

### [Examples]

The present invention will be more specifically described hereinafter with reference to examples, but the present invention is not limited to these examples.

### <Example 1>

Electroless plating was performed to form a Ni-P layer (content ratio of P: 12 wt%) on 5086 aluminum alloy of 5000 series provided by JIS H4000 (Si: 0.4 wt%, Fe: 0.5 wt%, Cu: 0.1 wt%, Mn: 0.2 wt%, Mg: 3.5 wt%, Zn: 0.25 wt%, Cr: 0.25 wt%, and Al: the balance) to have an arithmetic mean roughness Ra of the surface of 0.1 nm and a thickness of 10 µm, and a base material having a total thickness of 1.27 mm was thus prepared. Thereafter, the prepared base material was degreased and then washed with water, and electroless plating was performed using a Ni-P plating bath (ICP NICORON GM-NP, available from Okuno Chemical Industries Co., Ltd.) to form a Ni-P plate layer (content ratio of P: 7 wt%) with a thickness of 2 µm on the base material.

Subsequently, for the base material formed with the Ni-P plate layer, plating was performed using a plating bath as below under a condition of 40°C and 7 minutes to form a Ni-Pd-P alloy layer with a thickness of 0.79 µm on the Ni-P plate layer. The plating bath was obtained by mixing a Pd plating bath and a Ni-P plating bath as below with a ratio of (Pd plating bath):(Ni-P plating bath)=3:1 (volume ratio). With regard to the palladium salt, reductant and complexing agent in the plating bath, conventionally-known compounds were used.

### <Pd plating bath>

Palladium salt: An amount as Pd of 0.15 wt% in the Pd plating bath
Reductant: 1.8 wt%
Complexing agent: 0.63 wt%
Water: 97.2 wt%
pH: 5.8

### <Ni-P plating bath>

Nickel salt (nickel chloride): 1.8 wt%
Reductant (sodium hypophosphite): 2.4 wt%
Complexing agent: 2.4 wt%
Water: 93.2 wt%
pH: 5.2

Next, for the base material formed with the Ni-P plate layer and the Ni-Pd-P alloy layer, electroless reduction plating was performed using a cyanide-free electroless reduction gold plating bath (SELF GOLD OTK, available from Okuno Chemical Industries Co., Ltd.) under a condition of 60°C and 2.5 minutes to form a gold plate layer with a thickness of 36 nm on the Ni-Pd-P alloy layer, and a gold plate coated material was thus obtained.

### <Examples 2 and 3>

Gold plate coated materials were obtained like in Example 1 except for changing the condition, such as immersion time, in the electroless reduction plating for forming the gold plate layers so that the thicknesses of the gold plate layers to be obtained would be 49 nm (Example 2) and 63 nm (Example 3).

### <Example 4>

A gold plate coated material was obtained like in Example 1 except for substituting the above-described Ni-Pd-P alloy layer with a Ni-Pt-P alloy layer and changing the condition, such as immersion time, in the electroless reduction plating for forming the gold plate layer thereby to form a gold plate layer with a different thickness of 5 nm. The Ni-Pt-P alloy layer was formed with a thickness of 50 nm on the Ni-P plate layer using a plating bath as below under a condition of 35°C, 10 minutes and pH of 4.0. The plating bath was obtained by mixing a Pt plating bath (IM-PT, available from JAPAN PURE CHEMICAL CO., LTD.) and the above-described Ni-P plating bath used when forming the Ni-Pd-P alloy layer with a ratio of (Pt plating bath):(Ni-P plating bath)=3:7 (volume ratio).

### <Example 5>

A gold plate coated material was obtained like in Example 1 except for substituting the above-described Ni-Pd-P alloy layer with a Co-Pd-P alloy layer and changing the condition, such as immersion time, in the electroless reduction plating for forming the gold plate layer thereby to form a gold plate layer with a different thickness of 5 nm. The Co-Pd-P alloy layer was formed with a thickness of 50 nm on the Ni-P plate layer using a plating bath as below under a condition of 60°C, 10 minutes and pH of 8.5. The plating bath was obtained by mixing a Pd plating bath (PALLA TOP, available from Okuno Chemical Industries Co., Ltd.) and a Co plating bath as below with a ratio of (Pd plating bath):(Co plating bath)=1:6 (volume ratio).

### <Co plating bath>

Cobalt salt (cobalt sulfate): 10 g/L
Reductant (sodium hypophosphite): 25 g/L
Complexing agent (trisodium citrate): 30 g/L
Complexing agent (sodium tartrate): 30 g/L
Complexing agent (glycine): 7.58 g/L
Lead acetate: 0.3 ppm

### <Comparative Example 1>

A gold plate coated material was obtained like in Example 1 except for not forming the Ni-Pd-P alloy layer but forming a gold plate layer directly on the Ni-P plate layer. The gold plate layer was formed with a thickness of 35 nm using a cyanide-free electroless substitution gold plating bath (FLASH GOLD NC, available from Okuno Chemical Industries Co., Ltd.) to perform electroless substitution plating under a condition of 55°C and 1 minute and then using a cyanide-free electroless reduction gold plating bath (SELF GOLD OTK, available from Okuno Chemical Industries Co., Ltd.) to perform electroless reduction plating under a condition of 60°C and 1 minute.

### <Comparative Examples 2 to 4>

Gold plate coated materials were obtained like in Comparative Example 1 except for changing the condition, such as immersion time, in the electroless reduction plating for forming the gold plate layers so that the thicknesses of the gold plate layers to be obtained would be 78 nm (Comparative Example 2), 132 nm (Comparative Example 3) and 186 nm (Comparative Example 4).

### Evaluation of corrosion resistance of gold plate layer

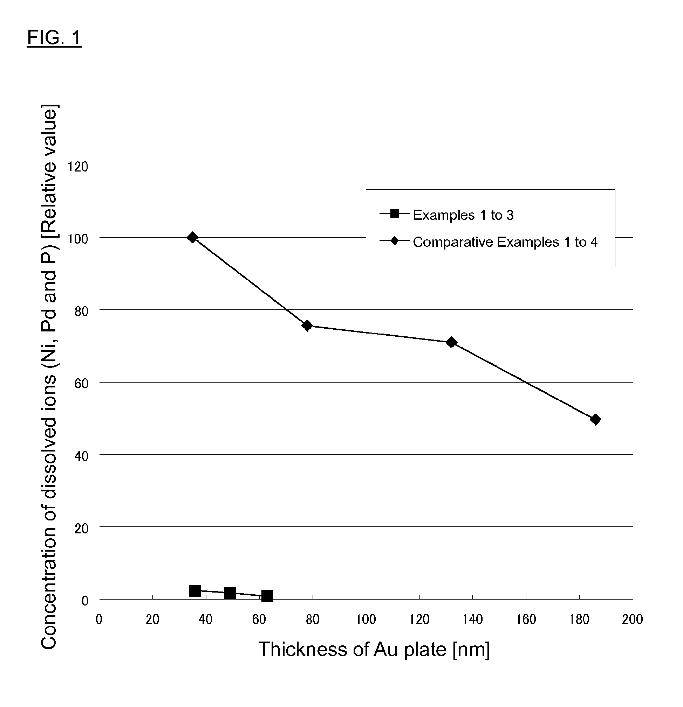

Thereafter, for the gold plate coated materials obtained in Examples 1 to 3 and Comparative Examples 1 to 4, evaluation of corrosion resistance was conducted. Specifically, the evaluation of corrosion resistance was performed through: masking each gold plate coated material with a polyimide tape to expose a surface area of 35 mm longitudinal and 20 mm lateral; immersing the gold plate coated material into sulfuric acid aqueous solution of 90°C (volume: 80 ml, pH: 1) for 50 hours; thereafter taking out the gold plate coated material; and measuring concentrations of ions (Ni, Pd and P) dissolved from the gold plate coated material into the sulfuric acid aqueous solution using an ICP (ICPE-9000, available from SHIMADZU CORPORATION). Results are shown in FIG. 1. The concentrations of dissolved ions (Ni, Pd and P) in the graph shown in FIG. 1 are represented by relative values to a value of 100 when the concentration of dissolved ions (Ni, Pd and P) was measured in Comparative Example 1.

Results of FIG. 1 show that, in Examples 1 to 3 in which the underlying alloy layer was formed on the base material and the gold plate layer was formed as the uppermost layer, the dissolution of ions was able to be effectively suppressed to exhibit excellent corrosion resistance even when the thickness of the gold plate layer was small. In contrast, according to Comparative Examples 1 to 4 in which the underlying alloy layer was not formed, results were such that the dissolution of ions was not able to be suppressed, thus exhibiting poor corrosion resistance.

### Measurement of contact resistance

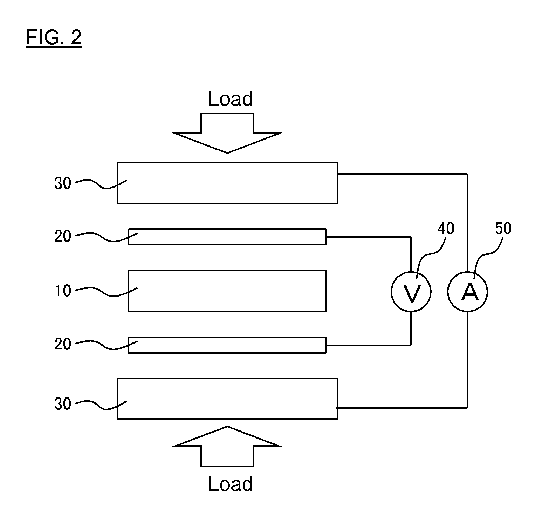

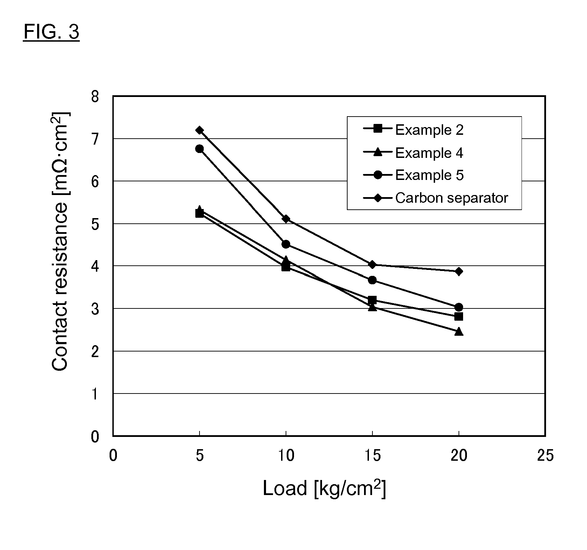

Next, each of the gold plate coated materials obtained in Examples 2, 4 and 5 was used to form a measurement system as shown in FIG. 2, and measurement of the contact resistance was performed using the measurement system formed. Note that the measurement system shown in FIG. 2 is configured of: a test piece 10 of the gold plate coated material obtained in each of Examples 2, 4 and 5; carbon cloths 20; gold plate-coated copper electrodes 30; a digital multimeter 40; and an ammeter 50. Specifically, at the time of measurement of the contact resistance, the test piece 10, which was obtained by working the gold plate coated material into a size of width of 20 mm, length of 20 mm and thickness of 1.27 mm, was first fixed by being interposed between the gold plate-coated copper electrodes 30 via the carbon cloths 20 (part number: TGP-H-090, available from Toray Industries, Inc), and the measurement system shown in FIG. 2 was thus provided. Subsequently, a rectifier (model number: AD8735, available from A&D Company, Limited) was used to flow a direct current of 2 A between the pair of copper electrodes 30 while applying a constant load (physical load) to the copper electrodes 30, and the voltage between the pair of carbon cloths 20 at that time was measured using the digital multimeter 40 (model number: 7541, available from Yokogawa Meters & Instruments Corporation). Thereafter, the resistance value between the carbon cloths 20 was calculated on the basis of the measured voltage between the carbon cloths 20, and the contact resistance between the test piece 10 and each of the carbon cloths 20 was obtained by dividing the calculated resistance value by the number (2) of contacting surfaces between the test piece 10 and the carbon cloths 20 and the contacting surface area (width 20 mm×length 20 mm) between the test piece 10 and each of the carbon cloths 20. In the present example, at the time of measuring the contact resistance, contact resistances at different loads were measured while varying the load to be applied to the copper electrodes 30. Obtained measurement results are shown in FIG. 3.

FIG. 3 also shows values of the contact resistance measured using a carbon separator (available from TOYO Corporation) as comparative data. The contact resistance when using the carbon separator was obtained by performing measurement in the above-described measurement system shown in FIG. 2 using a test piece 10 obtained by working the carbon separator into a size of width of 20 mm, length of 20 mm and thickness of 1.0 mm.

The results of FIG. 3 show that, in Examples 2, 4 and 5 in which the underlying alloy layer was formed on the base material and the gold plate layer was formed as the uppermost layer, the contact resistance was a lower value than that of the conventional carbon separator at all of the load values, thus exhibiting excellent conductivity.

### <Example 6>

A gold plate coated material was obtained like in Example 2 except for forming gas flow channels on the base material for the use as a separator for fuel cells before forming the Ni-P plate layer.

### Evaluation of fuel cell initial power generation capability

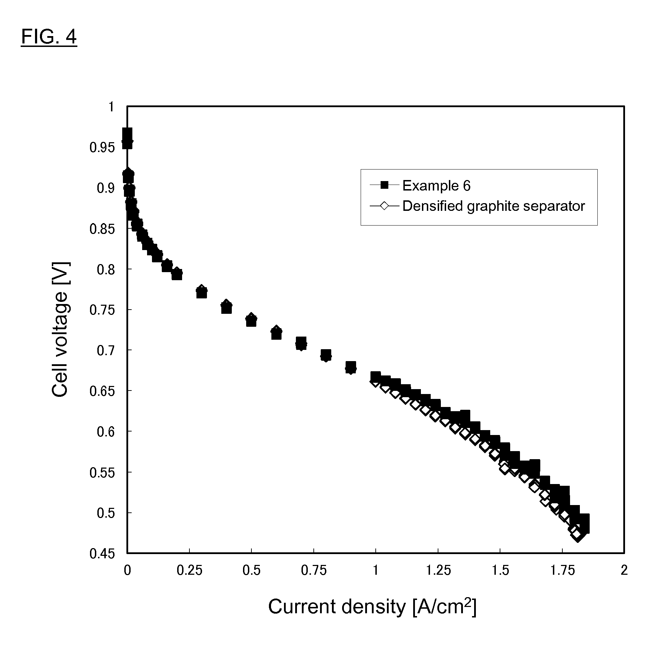

Next, evaluation of the fuel cell initial power generation capability was performed using the gold plate coated material obtained in Example 6. More specifically, first, the gold plate coated material obtained in Example 6 was used to produce a separator for fuel cells having a size of 10 cm square and an electrode surface area of 25 cm². Subsequently, a set of separators for fuel cells thus produced was incorporated into a fuel cell evaluation apparatus (model number: TFC-2000, available from Tsukasa Sokken Co., Ltd.), and power generation test was performed to measure an I-V characteristic, which was used as the basis to perform evaluation of the fuel cell initial power generation capability. In the power generation test, as the constitutional members of a membrane electrode assembly (MEA) for forming the fuel cell, there were used an electrolyte membrane of a thickness of 50 µm (part number: Nafionn 212CS, Dupont's product), a carbon material supporting platinum as an electrode catalyst, and a carbon paper diffusion layer of a thickness of 0.28 mm (part number: TGP-H-090, available from Toray Industries, Inc., subjected to water repellent treatment). The amount of supporting platinum used as an electrode catalyst was 0.45 mg/cm² at the anode side and 0.30 mg/cm² at the cathode side. The condition for the power generation test was of a cell temperature: 80°C, a humidified temperature: 80°C, a flow rate of anode gas (pure hydrogen): 400 cc/min, and a flow rate of cathode gas (air): 1000 cc/min. Obtained measurement results are shown in FIG. 4.

FIG. 4 also shows an evaluation result of the fuel cell initial power generation capability obtained using a set of densified graphite separators (available from Tsukasa Sokken Co., Ltd.) as comparative data.

The results of FIG. 4 show that, in Example 6 in which the underlying alloy layer was formed on the base material and the gold plate layer was formed as the uppermost layer, the cell voltage was comparable to that achieved using the conventional densified graphite separator, and the fuel cell initial power generation capability was confirmed to be sufficient when the separator was used as a separator for fuel cells.

### [Description of Reference Numerals]

- 10: Test piece
- 20: Carbon cloth
- 30: Copper electrode
- 40: Voltmeter
- 50: Ammeter

## Claims

1. A separator for fuel cells comprising:
a base material;
an underlying alloy layer formed on the base material; and
a gold plate layer formed on the underlying alloy layer, wherein
the underlying alloy layer is formed of an M1-M2-M3 alloy, and
M1 is at least one element selected from Ni, Fe, Co, Cu, Zn and Sn, M2 is at least one element selected from Pd, Re, Pt, Rh, Ag and Ru, and M3 is at least one element selected from P and B.

2. A fuel cell configured using the separator for fuel cells according to claim 1.

3. A fuel cell stack configured such that a plurality of the fuel cells according to claim 2 are stacked together.

4. A method of manufacturing a separator for fuel cells comprising:
forming an underlying alloy layer on a surface of a base material; and
forming a gold plate layer directly on the underlying alloy layer by means of electroless reduction plating using a cyanide-free gold plating bath, wherein
the underlying alloy layer is formed of an M1-M2-M3 alloy, and
M1 is at least one element selected from Ni, Fe, Co, Cu, Zn and Sn, M2 is at least one element selected from Pd, Re, Pt, Rh, Ag and Ru, and M3 is at least one element selected from P and B.
